# FASCICULE DE BREVET EUROPEEN

(11) **EP 0 598 838 B1**
(45) Date de publication et mention de la délivrance du brevet: **25.10.1995**
(21) Numéro de dépôt: 92918479.4
(22) Date de dépôt: 07.08.1992
(51) Int. Cl.: G06F 17/60

(54) **DISPOSITIF POUR UNE MEILLEURE GESTION DES OPERATIONS COURANTES D'ACHAT DE PRODUITS ET DE SERVICES**
VORRICHTUNG ZUR VERBESSERTEN HANDHABUNG VON LAUFENDEN OPERATIONEN HINSICHTLICH DES VERKAUFS VON PRODUKTEN UND DIENSTLEISTUNGEN
DEVICE FOR IMPROVED MANAGEMENT OF REGULAR PRODUCT AND SERVICES PURCHASE OPERATIONS

(30) Priorité: 09.08.1991 FR 9110168
(43) Date de publication de la demande: 01.06.1994
(73) Titulaire: GERBAULET, Jean-Pierre, F-92100 Boulogne (FR)
(72) Inventeur: GERBAULET, Jean-Pierre, F-92100 Boulogne (FR)
(74) Mandataire: Orès, Bernard
(86) Numéro de dépôt international: FR9200778
(87) Numéro de publication internationale: WO9303447

(56) Documents cités:
- EP-A- 0 338 770
- WO-A-85/02700
- GB-A- 2 216 691
- IBM TECHNICAL DISCLOSURE BULLETIN. vol. 24, no. 9, Février 1982, NEW YORK US pages 4630-4631 C.E. WILKINSON, JR. 'Restaurant System'
- EDUCATIONAL & INDUSTRIAL TELEVISION. Juin 1984, NEW YORK, NY, US pages 33-35 S. MATHENY ET AL 'Ordering Parts via Videodisc and Computer'

## Description

La présente invention a pour objet un dispositif permettant d'assurer une meilleure gestion des opérations courantes d'achat de produits et de services, principalement les achats domestiques effectués par les particuliers et, éventuellement, les approvisionnements de certaines entreprises.

On connait les difficultés rencontrées par les particuliers et les petites sociétés pour assurer la gestion de telles opérations dès lors qu'elles deviennent complexes; on connait aussi leur caractère fastidieux lorsqu'elles sont effectuées non pas occasionnellement mais d'une manière habituelle et répétitive, que les articles à acheter constituent une liste ne différant de la précédente que par une mise à jour, et on conçoit alors l'intérêt qu'il y aurait de pouvoir actualiser cette liste facilement à tout instant à partir d'informations à jour et facilement accessibles.

Certaines de ces informations dépendent directement de l'acheteur, comme l'état du stock ou le budget disponible; d'autres sont parametrables en fonction de critères tels que la saison, la périodicité des achats, le nombre de convives, une recette de cuisine ou un régime alimentaire; d'autres enfin sont disponibles chez le vendeur, mais ne sont pas toujours accessibles par l'acheteur au moment de la création de la liste, comme par exemple la disponibilité des articles, les prix, les promotions ou les soldes.

Ainsi, il serait avantageux pour l'acheteur de pouvoir constituer sa liste d'achats par un système simple mais efficace, sans omission ni redondance, même si cette liste devait être établie sur une période de temps assez longue et par plusieurs personnes indépendamment, et de pouvoir organiser automatiquement cette liste en fonction de critères tels que le type de produit, le lieu de vente, le mode de livraison ou de paiement, afin d'éviter erreurs et perte de temps lors de la passation de la commande ou de l'achat en magasin.

De son côté, le vendeur souhaiterait disposer d'un outil d'analyse marketing lui permettant d'identifier ses clients suivant leur localisation, leurs goûts, leurs habitudes d'achat et leur budget, afin de leur communiquer, dès qu'elles sont disponibles, toutes les informations utiles à la passation de la commande, leur offrant ainsi un meilleur service et augmentant ses chances de les fidéliser.

Certains logiciels de gestion de commande permettent de gérer la constitution de la liste, mais ils sont complexes et peu commodes pour les particuliers.

La mise en réseau d'ordinateurs permet l'échange de données en temps réel dans certains secteurs professionnels de pointe, comme l'industrie du voyage.

La vente par télématique associée à des catalogues vidéo pourrait, à long terme, simplifier et rationnaliser les achats des particuliers, avec cependant une limite dans les cas où le contact physique est nécessaire ou souhaité. Elle a d'ailleurs déjà été proposée dans WO-A-85 02700 qui décrit un système pour la commande de biens ou de services en engendrant des informations représentatives d'un ordre particulier, lesquelles sont adressées à un centre de traitement local par des lignes téléphoniques.

Par ailleurs, beaucoup de particuliers reçoivent une grande partie de leurs informations par la publicité télévisée et décident de leurs achats avant de se rendre sur le lieu de vente : ils notent leur liste sur une ardoise murale et la recopient sur une feuille de papier au moment de s'y rendre. Les bornes vidéo interactives d'information et d'aide à la décision pourraient, à terme, participer à la mise à jour de l'information sur le lieu de vente, sans toutefois permettre la synthèse avec les critères propres du client exprimés sur sa liste-papier.

La présente invention se propose de pallier ces inconvénients et de tirer partie des avantages potentiels d'un dispositif de communication constitué d'appareils présentant des caractéristiques semblables d'un point de vue technique mais répartis en trois catégories suivant leur mode de réalisation et leur implantation:
. des appareils installés à demeure dans un logement d'habitation, un bureau, etc., dits appareils résidents,
. des appareils portables,
. des appareils installés sur le lieu de vente, couplés par exemple avec une borne interactive d'information et d'aide à la décision.

Ces appareils sont capables de communiquer de façon interactive avec leur utilisateur, en l'occurence l'acheteur, et entre eux par une mise en réseau temporaire ou permanente.

Selon l'invention, un tel dispositif interactif de communication pour la gestion des opérations courantes d'achat de produits et de services, principalement les achats domestiques effectués les particuliers et, éventuellement, les approvisionnements de certaines entreprises, dispositif comprenant des appareils susceptibles de communiquer entre eux et dont l'un au moins comporte de premiers moyens de saisie des achats à effectuer constitués par exemple par un clavier de type machine à écrire et à calculer, par un écran tactile, ou par d'autres moyens tels que la reconnaissance d'écriture ou vocale et de deuxièmes moyens d'affichage alphanumérique, graphique ou vidéo, permettant de visualiser la liste des achats à effectuer ou en cours de traitement, la désignation de la catégorie d'achat ou d'autres critères de sélection, de troisièmes moyens de mémorisation dans lesquels sont rangés des fichiers d'articles constitués par des listes type ou encore par les listes précédentes destinées à servir de référence dans la création des nouvelles listes, de quatrièmes moyens de mémorisation dans lesquels sont rangées les listes en cours de constitution, est caractérisé en ce qu'il comprend aussi de cinquiemes moyens de validation des saisies effectuées constitués par un clavier dont les touches représentent les différentes catégories d'achats telles que par exemple la boisson, la boucherie, l'épicerie, la boulangerie l'entretien, la pharmacie, la teinturerie, une catégorie "divers", l'utilisation desdits moyens de validation après chaque saisie permettant d'organiser la liste des achats par catégorie indépendamment de leur ordre de saisie.

Selon une autre caractéristique de l'invention, le dispositif comprend en outre des moyens définissant une catégorie "messages" destinée à l'échange d'information entre les différents participants à la création de la liste.

Selon l'invention, également, un tel appareil comprend de sixièmes moyens de suggestion/sélection constitués par des touches donnant accès au contenu des troisièmes moyens de mémorisation et permettant de le transférer dans les quatrièmes moyens correspondant à la liste en cours de création.

Dans une variante de ce mode de réalisation, les touches de suggestion/sélection et les touches de validation de catégories peuvent coïncider.

Dans un mode de réalisation, un tel appareil comprend des septièmes moyens de sortie constitués par une imprimante permettant de matérialiser sur papier la liste des achats.

Selon un mode de réalisation avantageux de l'invention, un tel appareil comporte également :
- de huitièmes moyens de mémorisation dans lesquels sont rangés divers critères programmables tels que par exemple l'état du stock du vendeur et les prix des articles, ou d'autres critères plus spécifiques tels que l'état du stock de l'acheteur, le budget disponible, la périodicité des achats, la saison, le nombre de convives, une recette de cuisine ou des règles d'équilibre alimentaire,
- de neuvièmes moyens de calcul permettant de gérer les premiers et deuxièmes moyens, et notamment de trier les articles composant la liste stockée dans les quatrièmes moyens en fonction des critères stockés dans les huitièmes moyens,

L'invention propose également un dispositif dans lequel de dixièmes moyens de calcul permettant de comparer les listes en cours de constitution rangées dans les quatrièmes moyens avec les listes type et/ou les listes précédentes stockées dans les troisièmes moyens afin d'éviter les omissions et redondances.

Selon un autre mode de réalisation de l'invention, certains appareils peuvent être réalisés sous la forme d'unités portables susceptibles de dialoguer avec les autres appareils du dispositif à travers:
- de onzièmes moyens de connection tels que connecteur électrique, infrarouge, modem, permettant la lecture et l'écriture dans des mémoires extérieures réalisées sous la forme de carte à mémoire, ROM, RAM, disque magnétique, disque optique ou autre.

Selon un autre mode de réalisation de l'invention, certains appareils peuvent être intégrés à des bornes interactives susceptibles de dialoguer avec les autres appareils du dispositif à travers:
- de onzièmes moyens de connection tels que connecteur électrique, infrarouge, modem, permettant de lire et d'écrire dans des mémoires extérieures réalisées sous la forme de carte à mémoire, ROM, RAM, disque magnétique, disque optique ou autre.

Selon un autre mode de réalisation de l'invention, l'appareil résident est monté en réseau temporaire ou permanent avec d'autres appareils informatiques situés, certains chez l'acheteur: catalogue vidéo, terminal de passation de commande à distance et terminal de paiement susceptibles d'identifier l'acheteur par le code de sécurité de sa carte à mémoire ou de son boitier de commande à infrarouge, certains chez le vendeur: catalogue télématique, ordinateur central de gestion du réseau.

L'invention sera bien comprise par la description qui suit, faite en référence aux dessins annexés dans lesquels:
- la figure 1 est un organigramme de l'appareil type faisant partie du dispositif selon l'invention,
- la figure 2 représente l'organigramme d'une première forme de réalisation selon l'invention,
- la figure 3 représente une vue de face d'un appareil mural selon cette première forme de réalisation,
- la figure 4 représente l'organigramme d'une deuxième forme de réalisation selon l'invention,
- la figure 5 représente une vue de face d'un appareil mural selon cette deuxième forme de réalisation,
- la figure 6 représente une vue de trois-quarts d'un étui portable pour carte à mémoire, qui constitue une variante selon cette deuxième forme de réalisation,
- la figure 7 représente une autre variante de cette deuxième forme de réalisation dans laquelle l'appareil est intégré à une borne interactive,
- la figure 8 représente l'organigramme d'une troisième forme de réalisation selon l'invention,
- la figure 9 représente une vue de face d'un appareil mural selon cette troisième forme de réalisation,
- la figure 10 représente une variante selon cette troisième forme de réalisation sous la forme d'une vue de trois-quarts d'un boitier de commande à distance,
- la figure 11 représente une autre variante de cette troisième forme de réalisation dans laquelle l'appareil est intégré à une borne interactive,
- la figure 12 représente un organigramme de montage en réseau.

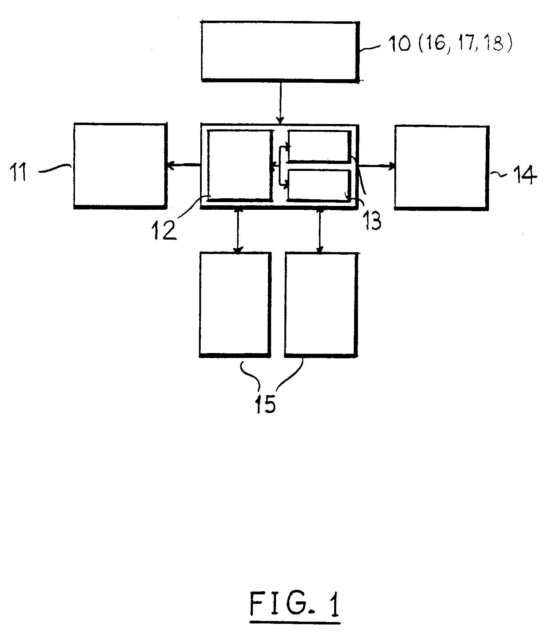

On se réfère maintenant à la figure 1 qui représente un organigramme de l'appareil-type composant le dispositif, dans lequel des moyens de saisie (10), d'affichage (11), de sortie (14) et d'interface avec des mémoires et des appareils extérieurs (15), sont reliés à des moyens de calcul (12) et de mémorisation (13).

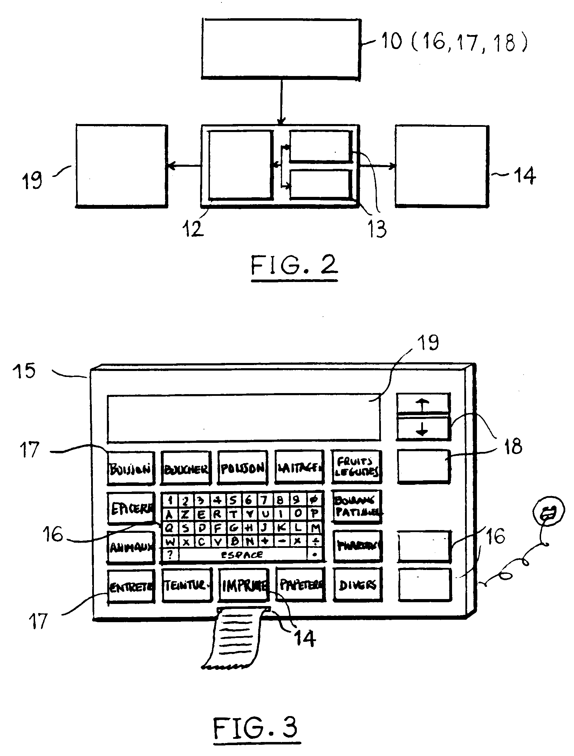

On se réfère ensuite à la figure 2 qui représente l'organigramme d'une première forme de réalisation dans laquelle l'appareil, destiné à faciliter les achats domestiques, comporte une imprimante (14) susceptible d'imprimer sur papier la liste des achats à effectuer.

La figure 3 représente la vue de face de l'appareil illustrant cette première forme de réalisation dans laquelle l'appareil se présente sous la forme d'un boitier dit "résident", de préférence mural (15), laissant apparaitre un clavier alphanumérique (16), des touches de validation (17) et de suggestion/sélection (18), un afficheur alphanumérique de type LCD ou LED (19), une imprimante (14).

Dans cette forme de réalisation, les touches spécifiques de validation permettent l'organisation et l'impression de la liste indépendamment de l'ordre de saisie; l'appareil peut aussi conserver en mémoire la dernière liste imprimée qui servira de référence pour l'établissement de la liste suivante; dans une variante préférée, l'appareil peut mémoriser une liste-type d'articles accessible par la touche de suggestion/sélection

Cette forme de réalisation constitue une version simple de l'invention qui comporte un seul appareil. L'information y est véhiculée dans le sens acheteur-lieu de vente par la liste papier imprimée par l'appareil résident. Dans ce mode de réalisation, le vendeur n'a aucune influence directe sur les décisions d'achat, sauf s'il est associé à l'établissement du fichier-type intégré à l'appareil.

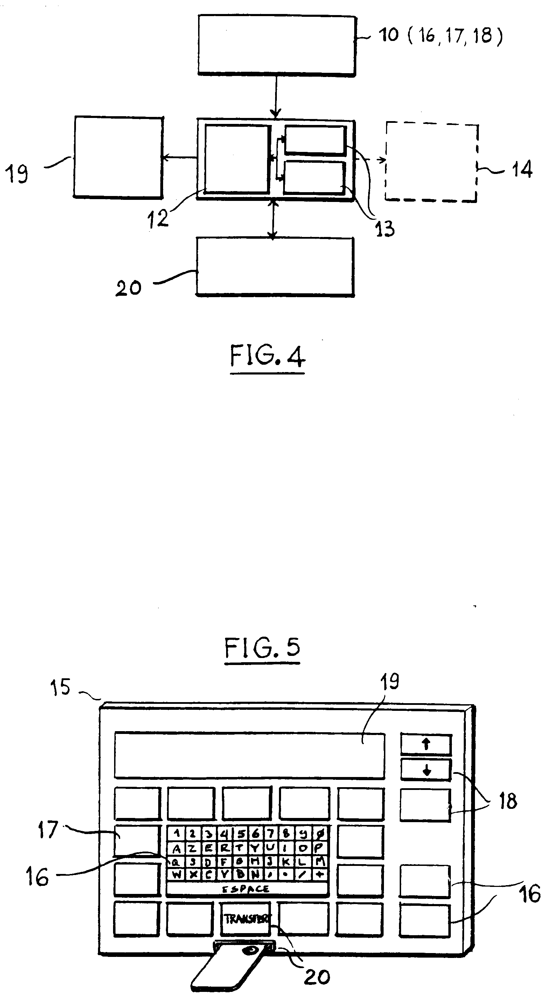

On se réfère maintenent à la figure 4 qui représente l'organigramme d'une deuxième forme de réalisation dans laquelle l'appareil dit "résident" comporte une interface avec d'autres appareils du dispositif, cette interface (20) étant réalisée au moyen d'un connecteur de lecture/écriture dans une mémoire inscriptible amovible: la mémoire est dédiée au transfert des informations entre les appareils du dispositif; elle peut être réalisée par exemple au moyen d'une carte dite "à puce", le connecteur étant alors semblable à ceux utilisés dans certains terminaux bancaires.

La figure 5 représente la vue de face d'une première variante de l'appareil illustrant cette deuxième forme de réalisation, dans laquelle l'appareil se présente sous la forme d'un boitier résident (15) comportant les mêmes caractéristiques que dans la première forme de réalisation représentée par la figure 3, la seule différence étant que l'imprimante (19) y est remplacée par un connecteur de lecture/écriture dans une carte à mémoire (20).

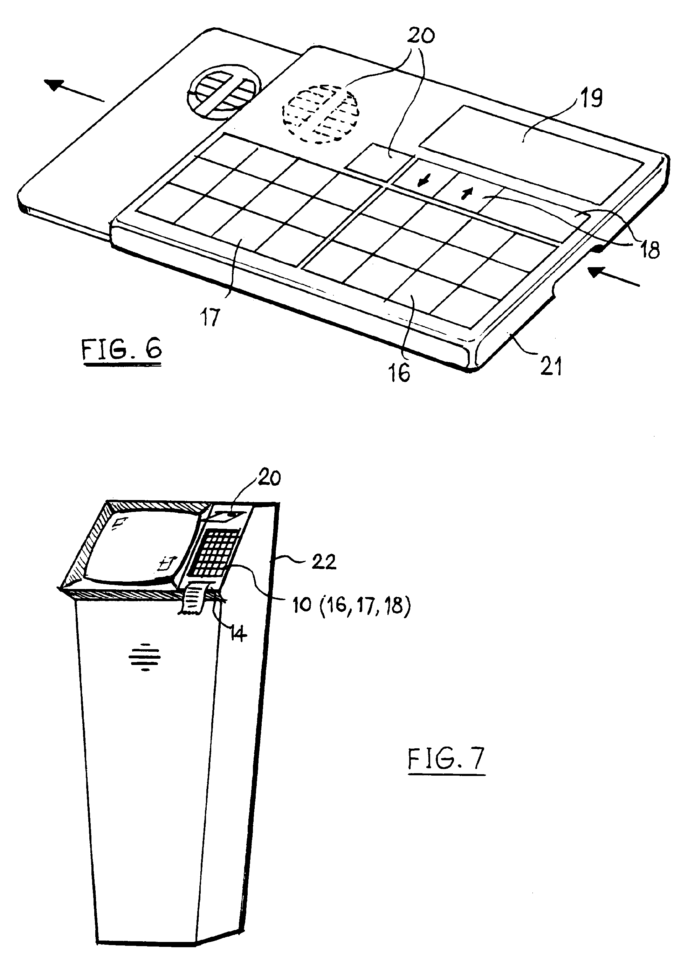

La figure 6 présente une autre variante de cette deuxième forme de réalisation de l'appareil sous sa forme d'un étui portable pour carte à mémoire (21) comportant les mêmes fonctions que l'appareil résident associé, la connectique permettant de réaliser un tel étui de petite taille étant disponible sur le marché, par exemple auprès de sociétés comme BULL CP8, SCHLUMBERGER ou GEMPLUS s'il s'agit de cartes dites "à puce", ou chez d'autres fournisseurs comme ATARI ou SHARP utilisant des technologies différentes de mémoires connectables de petites dimensions.

L'appareil résident de la figure 5 et l'appareil portable de la figure 6 échangent des informations au moyen de la carte à mémoire ou de toute autre mémoire amovible inscriptible disponible sur le marché.

La figure 7 représente une troisième variante de cette deuxième forme de réalisation, dans laquelle l'appareil est intégré à une borne interactive (22):
cet appareil est capable de communiquer avec les autres appareils du dispositif au moyen de son connecteur d'interface carte à mémoire (20), et d'imprimer la liste des achats sur papier au moyen de son imprimante (14) ;
il organise par ailleurs cette liste en fonction du plan du magasin, fournit éventuellement un schéma d'accès aux rayons, y adjoint conseils, suggestions et publicités utiles à l'achat immédiat.

L'acheteur peut alors faire ses courses lui-même à l'aide du listing papier, prendre livraison de ses achats à la caisse s'il le désire ou se faire livrer chez lui.

L'appareil est également capable d'identifier le client, de transférer par l'intermédaire d'une interface informatique non figurée sur le dessin mais d'une technologie banale, les informations le concernant à un ordinateur central qui lui attribuera des points de fidélité, des rabais ou autres avantages, d'inscrire dans la mémoire de la carte des informations dont l'acheteur pourra prendre connaissance soit par l'intermédiaire de son appareil portable, soit plus tard sur son appareil résident.

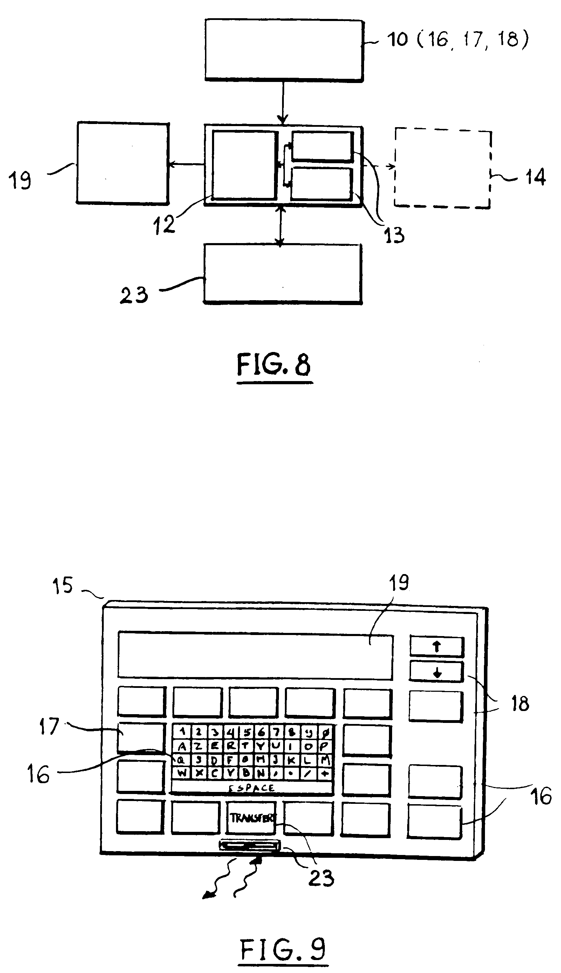

On se réfère maintenant à la figure 8 qui représente l'organigramme d'une troisième forme de réalisation d'un appareil selon l'invention, dans laquelle l'interface entre les différents appareils est réalisée par un dispositif de communication à distance (23), à infrarouge par exemple.

La figure 9 représente la vue de face d'une première variante de l'appareil illustrant cette troisième forme de réalisation, dans laquelle l'appareil résident présente les mêmes caractéristiques que dans la première variante de la deuxième forme de réalisation représentée par la figure 5, la seule différence étant que le connecteur d'interface avec une carte à mémoire (20) y est remplacé par un dispositif à infrarouge (23) capable de fonctionner dans le sens de l'émission et dans celui de la réception.

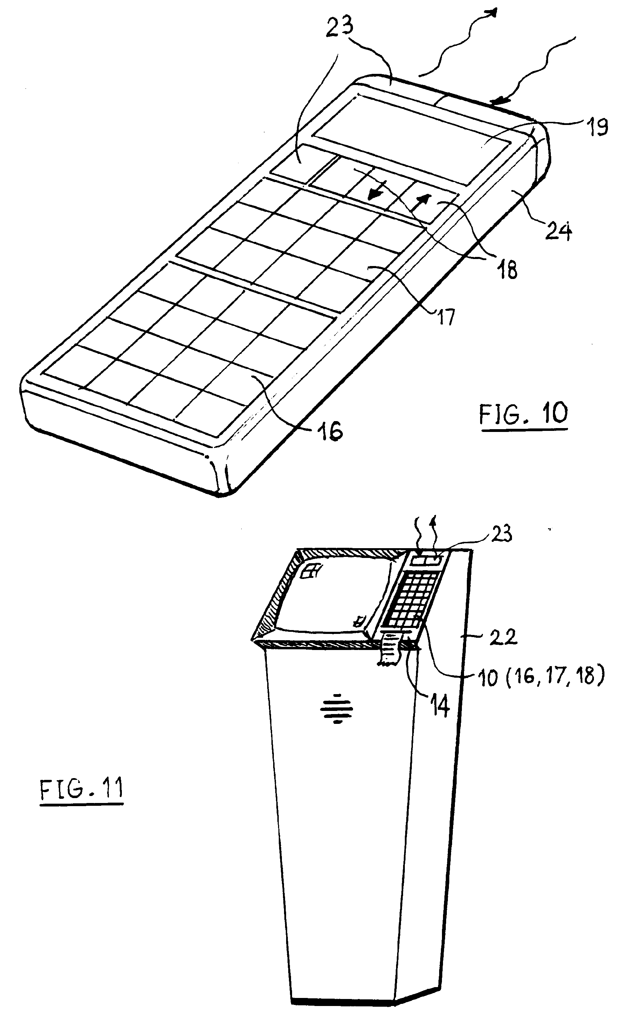

La figure 10 illustre une deuxième variante de cette troisième forme de réalisation de l'appareil qui se présente comme un boitier (24) comportant les mêmes fonctionnalités que l'appareil résident associé, les 2 appareils étant suceptibles d'échanger des informations au moyen du dispositif à infrarouge (23) tel que ceux couramment employés dans la commande à distance de nombreux appareils audiovisuels grand public.

Cet appareil peut présenter la forme d'un boitier de poche (24) qui sera posé ou fixé sur le caddy pendant les achats, la liste de ceux-ci pouvant défiler sur l'afficheur.

La figure 11 représente une troisième variante de cette troisième forme de réalisation, dans laquelle l'appareil est intégré à une borne interactive (22):
cet appareil est capable de communiquer avec les autres appareils au moyen du dispositif à infrarouge (23), et d'imprimer la liste des achats sur papier au moyen de son imprimante (14).

Cette variante possède par ailleurs les mêmes possibilités que la variante "borne" du deuxième mode de réalisation.

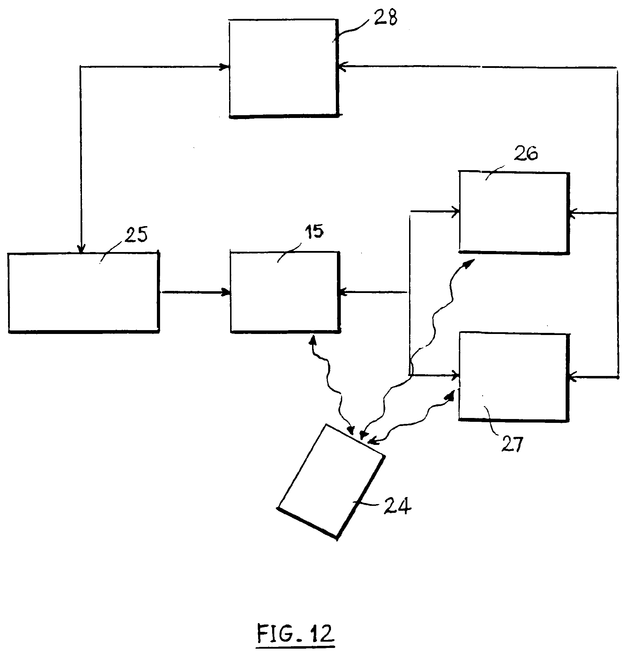

On se réfère enfin à la figure 12 qui représente une quatrième forme de réalisation du dispositif selon l'invention, correspondant à un contexte d'achat à distance et permettant de générer la liste des achats, de passer la commande, de demander sa livraison et d'effectuer son règlement sans se déplacer.

Dans cette forme de réalisation, l'appareil résident (15) est monté en réseau temporaire ou permanent avec d'autres appareils informatiques situés,
certains chez l'acheteur: catalogue vidéo (25), terminal de passation de commande à distance (26) et terminal de paiement (27) suceptibles d'identifier l'acheteur par le code de sécurité de sa carte à mémoire ou de son boitier de commande à infrarouge (24), certains chez le vendeur: catalogue télématique (25), ordinateur central de gestion du réseau (28).

## Revendications

1. Dispositif interactif de communication pour la gestion des opérations courantes d'achat de produits et de services, principalement achats domestiques effectués par les particuliers et, éventuellement, les approvisionnements de certaines entreprises, dispositif comprenant des appareils susceptibles de communiquer entre eux et dont l'un au moins comporte de premiers moyens de saisie des achats à effectuer (10) constitués par exemple par un clavier de type machine à écrire et à calculer (16), par un écran tactile, ou par d'autres moyens tels que la reconnaissance d'écriture ou vocale (10), et de deuxièmes moyens d'affichage alphanumérique, graphique ou vidéo (11, 19), permettant de visualiser la liste des achats à effectuer ou en cours de traitement, la désignation de la catégorie d'achat ou d'autres critères de sélection, de troisièmes moyens de mémorisation (13) dans lesquels sont rangés des fichiers d'articles constitués par des listes type ou encore par les listes précédentes destinées à servir de référence dans la création des nouvelles listes, de quatrièmes moyens de mémorisation (13) dans lesquels sont rangées les listes en cours de constitution, caractérisé en ce qu'il comprend aussi de cinquièmes moyens de validation des saisies effectuées constitués par un clavier dont les touches (17) représentent les différentes catégories d'achats telles que par exemple la boisson, la boucherie, l'épicerie, la boulangerie, l'entretien, la pharmacie, la teinturerie, une catégorie "divers", l'utilisation desdits moyens de validation après chaque saisie permettant d'organiser la liste des achats par catégorie indépendamment de leur ordre de saisie.

2. Dispositif selon la revendication 1, caractérisé en ce qu'il comprend en outre des moyens définissant une catégorie "messages" destinée à l'échange d'informations entre les différents participants à la création de la liste.

3. Dispositif selon la revendication 1, comprenant de plus: de sixièmes moyens de suggestion/ sélection constitués par des touches (18) donnant accès au contenu des troisièmes moyens de mémorisation et permettant de le transférer dans les quatrièmes moyens correspondant à la liste en cours de création.

4. Dispositif selon la revendication 3, caractérisé en ce que les touches de suggestion/sélection et les touches de validation de catégorie coïncident.

5. Dispositif selon l'une des revendications précédentes, comprenant de plus: de septièmes moyens de sortie constitués par une imprimante (14) permettant de sortir sur papier la liste des achats.

6. Dispositif selon la revendication 1, comprenant de plus: de huitièmes moyens de mémorisation (13) dans lesquels sont rangés divers critères programmables tels que par exemple l'état du stock du vendeur et les prix des articles, ou d'autres critères plus spécifiques tels que l'état du stock de l'acheteur, le budget disponible, la périodicité des achats, la saison, le nombre de convives, des recettes de cuisine ou des règles d'équilibre alimentaire, et de neuvièmes moyens de calcul (12) permettant de gérer les premiers et deuxièmes moyens, et notamment de trier les articles composant la liste stockée dans les quatrièmes moyens en fonction des critères stockés dans les cinquièmes moyens.

7. Dispositif selon la revendication 1, comprenant de plus: de dixièmes moyens de calcul (12) permettant de comparer les listes en cours de constitution rangées dans les quatrièmes moyens avec les listes type et/ou les listes précédentes stockées dans les troisièmes moyens afin d'éviter les omissions et redondances.

8. Dispositif selon la revendication 1, caractérisé en ce que certains des appareils qu'il comporte sont montés en réseau temporaire ou permanent avec d'autres appareils informatiques situés, certains chez l'acheteur: catalogue vidéo (25), terminal de passation de commande à distance (26) et terminal de paiement (27) susceptibles d'identifier l'acheteur par le code de sécurité de sa carte à mémoire ou de son boîtier de commande à infrarouge (24), certains chez le vendeur: catalogue télématique (25), ordinateur central de gestion du réseau (28).

9. Appareil propre à entrer dans la constitution du dispositif selon l'une quelconque des revendications précédentes, caractérisé en ce qu'il est réalisé sous la forme d'une unité portable (21, 24), susceptible de dialoguer avec les autres appareils du dispositif à travers de onzièmes moyens de connection tels que connecteur électrique (20), infrarouge (23), modem, permettant la lecture et l'écriture dans des mémoires extérieures réalisées sous la forme de carte à mémoire, ROM, RAM, disque magnétique, disque optique ou autre.

10. Appareil propre à entrer dans la constitution d'un dispositif selon l'une quelconque des revendications précédentes, caractérisé en ce qu'il est intégré à une borne interactive (22) susceptible de dialoguer avec les autres appareils du dispositif à travers. de onzièmes moyens de connection tels que connecteur électrique (20), infrarouge (23), modem, permettant de lire et d'écrire dans des mémoires extérieures réalisées sous la forme de carte à mémoire, ROM, RAM, disque magnétique, disque optique ou autre.

## Patentansprüche

1. Interaktive Vorrichtung zur Kommunikation für die Verarbeitung von laufenden Operationen, zum Kauf von Produkten und
Dienstleistungen, hauptsächlich häuslichen, durch die einzelnen und gegebenenfalls die Bereitstellungen von bestimmten Unternehmen durchgeführten Käufen, wobei die Vorrichtung Einrichtungen umfaßt, die geeignet sind, untereinander zu kommunizieren, und von denen wenigstens die eine erste Mittel (10) zum Erfassen von durchzuführenden Käufen, die zum Beispiel durch eine Tastatur (16) vom Typ einer Schreib- und Rechenmaschine, durch einen Tastbildschirm oder durch andere Mittel, wie die Schrift- oder Stimmerkennung (10), gebildet sind, und zweite Mittel (11, 19) zur alphanummerischen, graphischen oder bildlichen Anzeigen, die gestatten, die Liste von durchzuführenden Käufen oder im Verlauf einer Behandlung die Bestimmung der Kategorie eines Kaufs oder andere Auswahlkriterien zu visualisieren, dritte Mittel (13) zur Speicherung, in denen Hauptgruppen von Artikeln angeordnet sind, welche durch Typlisten oder außerdem durch vorhergehende, bestimmte Listen, um in der Gestaltung von neuartigen Listen als Bezug zu dienen, gebildet sind, vierte Mittel (13) zur Speicherung, in denen die Listen im Verlauf einer Bildung angeordnet sind, umfaßt, dadurch gekennzeichnet, daß sie weiterhin fünfte Mittel zur Validierung von durchgeführten Erfassungen, die durch eine Tastatur gebildet sind, deren Tasten (17) verschiedene Kategorien eines Kaufs, wie zum Beispiel Getränk, Metzgerei, Lebensmittel, Bäckerei, Unterhaltung, Pharmazie, Färbung, eine Kategorie "Diverses" darstellen, wobei die Verwendung der Mittel zur Validierung anch jeder Erfassung gestatten, die Liste von Käufen durch eine Kategorie unabhängig von deren Ordnung zur Erfassung zu organisieren.

2. Vorrichtung nach Anspruch 1, dadurch gekennzeichnet, daß sie weiterhin Mittel umfaßt, die eine Kategorie "Nachrichten" definiert, welche zum Austausch von Informationen zwischen den verschiedenen Teilnehmern bei der Gestaltung der Liste bestimmt ist.

3. Vorrichtung nach Anspruch 1, weiterhin umfassend: sechste Mittel zur Anregung/Auswahl, die durch Tasten (18) gebildet sind, welche einen Zugang zu dem Inhalt der dritten Mittel zur Speicherung geben und dessen Übertragung in die vierten Mittel entsprechend der Liste im Verlauf der Gestaltung gestatten.

4. Vorrichtung nach Anspruch 3, dadurch gekennzeichnet, daß die Tasten zur Anregung/Auswahl und die Tasten zur Validierung einer Kategorie koinzident sind.

5. Vorrichtung gemäß einem der vorhergehenden Ansprüche, weiterhin umfassend: siebte Mittel zur Ausgabe, die durch einen Drucker (14) gebildet sind, welcher gestattet, die Liste von Käufen auf Papier auszugeben.

6. Vorrichtung nach Anspruch 1, weiterhin umfassend: achte Mittel (13) zur Speicherung, in denen diverse programmierbare Kriterien, wie zum Beispiel die Lagerbestandsaufstellung des Verkäufers und die Preise der Artikel, oder andere spezifischere Kriterien, wie die Lagerbestandsaufstellung des Käufers, das verfügbare Budget, die Peridiodizität der Käufe, die Saison, die Anzahl von Gästen, die Einnahmen einer Küche oder Regeln des Ernährungsgleichgewichtes, angeordnet sind, und neunte Mittel (12) zur Berechnung, die gestatten, die ersten und zweiten Mittel zu leiten und insbesondere die Artikel, welche die Liste umfassen, die in den vierten Mitteln gespeichert ist, in Funktion von Kriterien, die in den fünften Mitteln gespeichert sind, auszusortieren.

7. Vorrichtung nach Anspruch 1, weiterhin umfassend: zehnte Mittel (12) zur Berechnung, die gestatten, die Listen im Verlauf einer Bildung, die in den vierten Mitteln angeordnet sind, mit den Typlisten und/oder den vorhergehenden Listen, die in den dritten Mitteln gespeichert sind, zu vergleichen, um die Auslassungen und Redundanzen zu vermeiden.

8. Vorrichtung nach Anspruch 1, dadurch gekennzeichnet, daß bestimmte Einrichtungen, die sie umfaßt, in einem temporären oder permanenten Netz mit weiteren Informationseinrichtungen angeordnet sind, wobei bestimmte bei dem Käufer: Videokatalog (25), Terminal (26) zur Auftragsvergabe aus der Entfernung und Terminal (27) zur Zahlung, welche geeignet sind, den Käufer durch den Sicherheitscode seiner Speicherkarte oder seinem Infrarot-Auftragsgehäuse (24) zu identifizieren, bestimmte bei dem Verkäufer: Telematikkatalog (25), Zentralrechner (28) zur Verarbeitung des Netzes, gelegen sind.

9. Gerät, das geeignet ist, in die Anordnung der Vorrichtung nach einem der vorhergehenden Ansprüche zu passen, dadurch gekennzeichnet, daß es in der Form einer tragbaren Einheit (21, 24) realisiert ist, die geeignet ist, mit den weiteren Einrichtungen der Vorrichtung über elfte Mittel zur Verbindung, wie einem elektrischen Verbinder (20), einer Infrarot-Einrichtung (23), einem Modem, welche das Einlesen und das Einschreiben in äußere, in der Form einer Speicherkarte, eines ROMs, eines RAMs, einer magnetischen Scheibe, einer optischen oder anderen Scheibe realisierte Speicher gestatten, in Dialog zu treten.

10. Gerät, das geeignet ist, in die Anordnung einer Vorrichtung nach einem der vorhergehenden Ansprüche zu passen, dadurch gekennzeichnet, daß es in einer interaktiven Klemme (22) integriert ist, die geeignet ist, mit den weiteren Geräten der Vorrichtung über elfte Mittel zur Verbindung, wie einem elektrischen Verbinder (20), einer Infrarot-Einrichtung, einem Modem, welche gestatten, in äußeren, in der Form einer Speicherkarte, eines ROMs, eines RAMs, einer magnetischen Scheibe, einer optischen oder anderen Scheibe realisierten Speichern zu lesen und zu schreiben, in Dialog zu treten.

## Claims

1. Interactive communication apparatus for the management of continuous product and service purchase operations, principally domestic purchases made by individuals and possibly the provisions of certain businesses, the apparatus comprising devices able to communicate between themselves and of which at least one comprises first data entry means (10) for the purchases to be made, comprising, for example, a keyboard (16) of the typewriter and calculator type, a touch screen or other means such as handwriting or voice recognition (10), and second alphanumeric, graphic or video display means (11, 19) permitting display of the list of purchases to be made or being processed, designation of the category of purchase or other selection criteria, third memory means (13) in which the files of articles constituted by lists of typical articles or even by previous lists intended to serve as a reference in the creation of new lists are provided, fourth memory means (13) in which the lists being compiled are provided, characterised in that it also comprises fifth validation means for the data entries made, comprised of a keyboard of which the keys (17) represent the different categories of purchases such as, for example, drinks, meat products, groceries, bakery products, household products, pharmaceutical products, dry cleaning and a "miscellaneous" category, the use of the said validation means after each entry making it possible to arrange the list of purchases by category independently of their order of entry.

2. Apparatus according to claim 1, characterised in that it further comprises means defining a "messages" category intended for the exchange of data between the different participants in the creation of the list.

3. Apparatus according to claim 1, further comprising: sixth suggestion/selection means comprised of keys (18) giving access to the content of the third memory means and permitting it to be transferred into the fourth means corresponding to the list being created.

4. Apparatus according to claim 3, characterised in that the suggestion/selection keys and the category validation keys coincide.

5. Apparatus according to any of the preceding claims, further comprising: seventh output means comprised of a printer (14) allowing the list of purchases to be output on paper.

6. Apparatus according to claim 1, further comprising: eighth memory means (13) in which are provided various programmable criteria such as, for example, the state of the vendor's stock and the prices of the articles, or other more specific criteria such as the state of the buyer's stock, the budget available, the periodicity of the purchases, the season, the number of guests, recipes or rules of dietary balance, and ninth calculation means (12) permitting management of the first and second means and in particular sorting of the articles comprising the list stored in the fourth means according to criteria stored in the fifth means.

7. Apparatus according to claim 1, further comprising tenth calculation means (12) permitting comparison of the lists being compiled, provided in the fourth means with the typical lists and/or the previous lists stored in the third means in order to avoid omissions and redundancies.

8. Apparatus according to claim 1, characterised in that some of the devices which it comprises are mounted in a temporary or permanent network with other data processing devices some located with the buyer: video catalogue (25), remote instruction transfer terminal (26) and payment terminal (27) which are able to identify the buyer by the security code of his memory card or his infrared control box (24), and some located with the vendor: telematic catalogue (25), central network management computer (28).

9. Device able to form part of the apparatus according to any of the preceding claims, characterised in that it is produced in the form of a portable unit (21, 24) able to communicate with the other devices of the apparatus through eleventh connection means such as an electrical connector (20), infrared connector (23), modem, permitting reading from and writing to external memories produced in the form of a memory card, ROM, RAM, magnetic disc, optical disc or the like.

10. Device able to form part of apparatus according to any of the preceding claims, characterised in that it is integrated in an interactive terminal (22) able to communicate with the other devices of the apparatus through eleventh connection means such as an electrical connector (20), infrared connector (23), modem, permitting reading from and writing to external memories produced in the form of a memory card, ROM, RAM, magnetic disc, optical disc or the like.
